# EUROPEAN PATENT APPLICATION

(11) **EP 0 863 456 A1**
(43) Date of publication of application: **09.09.1998**
(21) Application number: 98200263.6
(22) Date of filing: 29.01.1998
(51) Int. Cl.: G06F 3/023

(54) **A computer keyboard for improved numeric data input**

(30) Priority: 07.03.1997 IE 970166
(71) Applicant: Alps Electric (Ireland) Ltd., County Cork (IE)
(72) Inventor: McEvoy, David, Guildford GU1 2BL, Surry (GB); Mievis, August, 3440 Zoutleeuw (BE)
(74) Representative: Hanna, Peter William Derek

(57) **Abstract**

A computer keyboard for improved numeric data input is disclosed, in particular an IBM-compatible keyboard suitable for financial and accounting applications where the keyboard is used mainly for numeric data input. A 5 x 7 array (5) of keys is located to the right side or the left side of the keyboard, in which said array includes the ten numeric keys designated 0 to 9; a decimal point; at least the basic arithmetic function keys designated "plus" (+), "minus" (-), "multiply" (*), and "divide" (/); an "enter" key; and at least 15 designated function keys, preferably including function keys selected from the group including those designated "insert", "delete", five cursor keys, designated "arrow-up", "arrow-down", "arrow-left", "arrow-right" and "home", and "page up", "page down", "end", "num lock", "print screen", "scroll lock" and "pause". A group of blank keys (6) is preferably available for user-defined functions, for example, five user-defined function keys.

## Description

The present invention relates to computer keyboard for improved numeric data input, in particular to an IBM-compatible keyboard suitable for financial and accounting applications where the keyboard is used mainly for numeric data input.

A typical IBM-compatible keyboard includes keys which are arranged in four main groups, as follows:
1. a top row of keys including the "ESC" or escape key, together with function keys;
2. a main group of alphanumeric keys comprising the "QWERTY" keys;
3. a second group of function keys such as "insert", "delete", and cursor keys, located to the right of the main "QWERTY" group of keys; and
4. a separate group of keys in a 4 x 5 array comprising a second set of numeric keys 0-9, a decimal point key, a second set of mathematical function keys including "+" and "-", etc., and a second "enter" key, generally similar to an electronic calculator keypad layout. This group is located to the right of the second group of function keys 3. There may be different variations in the function assigned to each key, but the last-mentioned group of numeric keys in an IBM-compatible keyboard is always set out in a 4 x 5 key array.

For users who spend most of their time inputting numeric data, such as in financial, accounting and banking operations, it would be advantageous to have all of the most frequently used function keys located as close as possible to the numeric keys, to say the right hand side of tile keyboard, for right-handed people, as this would make more ergonomic sense and may lead to less repetitive strain injury in keyboard operators' hands and wrists caused by continual movements from one portion of the keyboard to another.

Accordingly, the present invention provides a 5 x 7 array of key caps located to the right side or the left side of an alphanumeric keyboard, in which said array includes the ten numeric keys designated 0 to 9; at least the basic arithmetic function keys designated plus (+), minus (-), multiply (*), and divide (/); an "enter" key; and at least 15 designated function keys.

Preferably, said designated function keys include function keys selected from the group including those designated as "insert", "delete"; five cursor keys, designated "arrow-up", "arrow-down", "arrow-left", "arrow-right" and "home"; "page up", "page down", "end"; "num lock; "print screen", "scroll lock" and "pause"; and a group of blank keys available for user-defined functions.

Advantageously, additional numeric keys are included designated "00" and "000" for inputting double zero and treble zero respectively at one keystroke.

Preferably, the numeric key caps contain only numeric indicia as their legend, and are not designated with any dual or shift key functionality.

Advantageously, the "enter" key is a double size key defined by a 2 x 1 section of the array, but is most preferably a quadruple size key, defined by a 2 x 2 section of the array, and is most preferably placed at the lower right hand corner of the array.

Preferred embodiments of the present invention will now be described with reference to the accompanying drawings, in which:
Figure 1 shows a version for the United Kingdom market of a typical IBM-compatible keyboard which is part of the prior art,
Figures 2, 3a and 3b show alternative embodiments of an alphanumeric keyboard, comprising the same 5 x 7 array in accordance with the present invention, and including five blank user-designated function keys,
Figures 3c and 3e show further different embodiments of the present invention, comprising the same 5 x 7 array in accordance with the present invention, and including two blank user-designated function keys,
Figures 3d and 4 show further different embodiments of the present invention, comprising the same 5 x 7 array in accordance with the present invention, but without blank user-defined function keys.

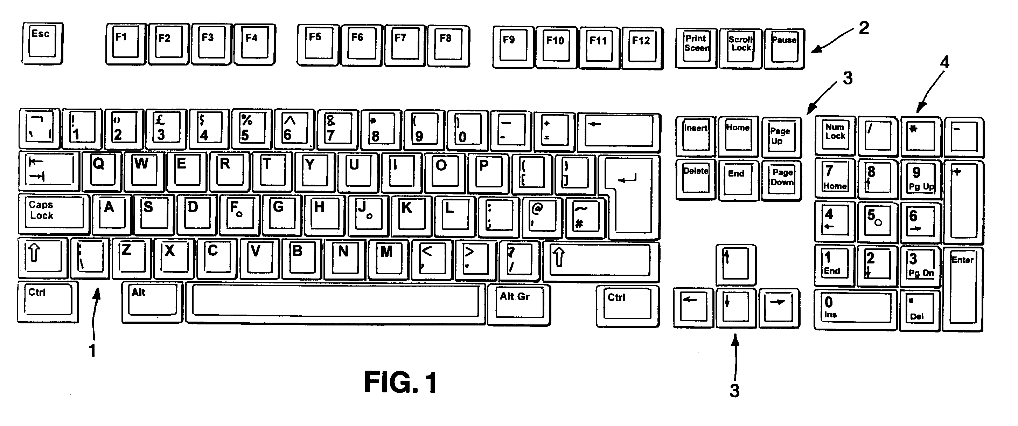

A standard IBM-compatible alphanumeric keyboard is shown in Figure 1, comprising an alphanumeric QWERTY keyboard section 1, a top row of function keys 2, a group of function keys including cursor keys 3, and a 4 x 5 array of numeric keys 4 at the right hand side.

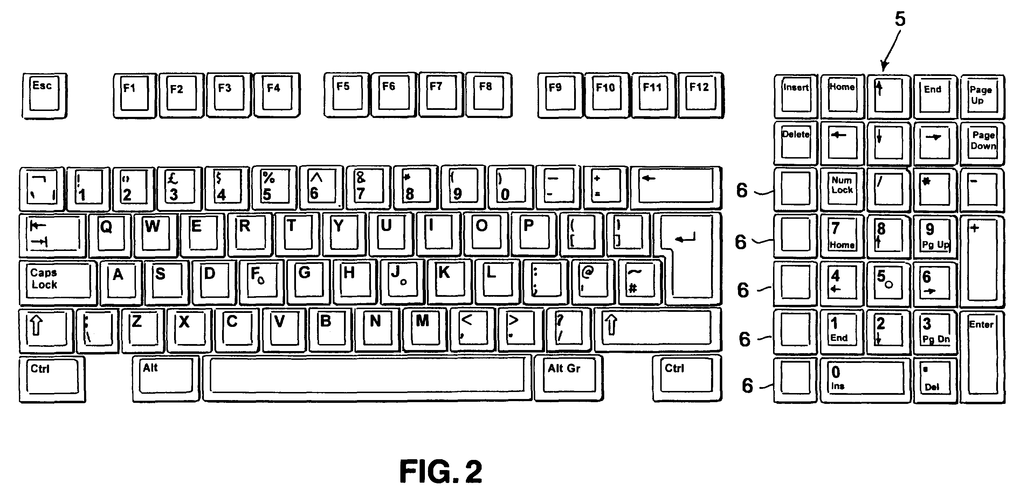

In an embodiment of the present invention shown in Figure 2, a 5 x 7 rectangular array of keys 5 is located to the right hand side of the keyboard to include keys designated for numeric data entry and for arithmetic functions, as in the prior art. However, the group of keys for cursor functions, designated "arrow-up", "arrow-down", "arrow-left", "arrow-right", as well as the function keys "insert", "delete", "home', "end", "page up" and "page down" are included in the 5 x 7 array. In this embodiment the "print screen", "scroll lock" and "pause" function keys are omitted. However, five blank function keys 6 designated for user-defined functions are included in the array.

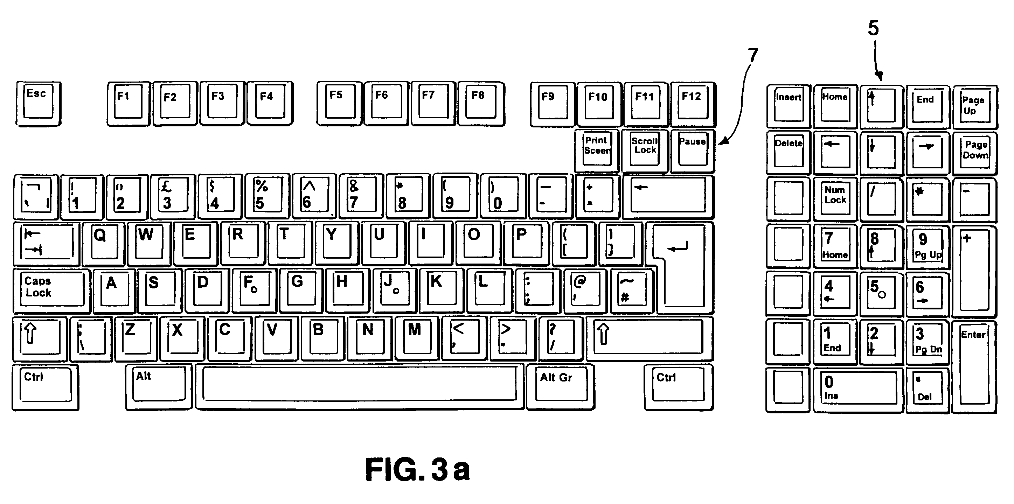

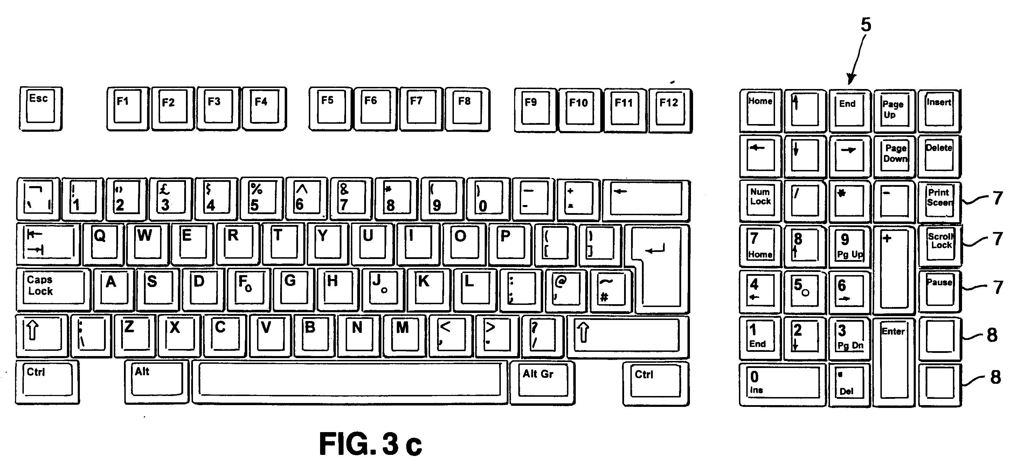

Another embodiment of the invention is shown in Figure 3a, identical to that of Figure 2, but including "print screen", "scroll lock" and "pause" keys 7.

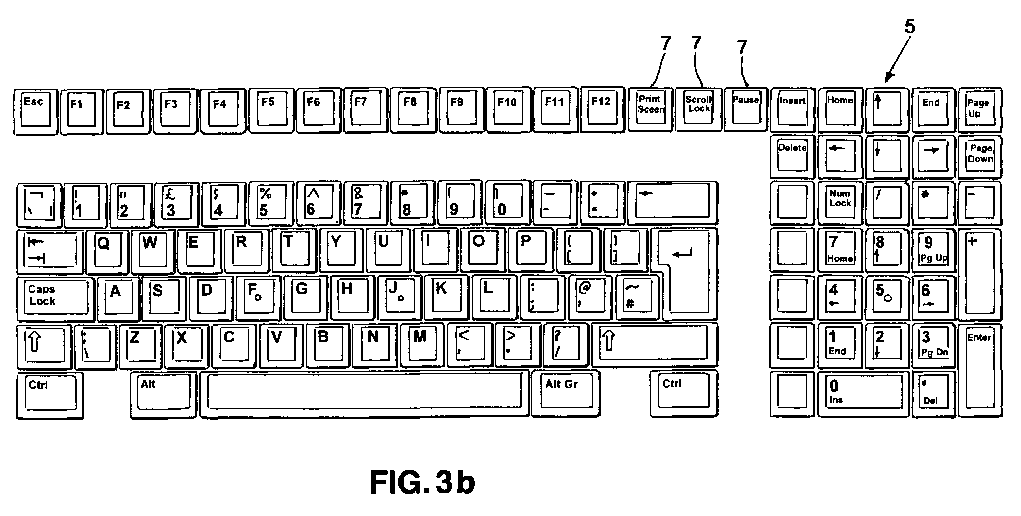

Another embodiment of the invention is shown in Figure 3b, in which the "print screen", "scroll lock" and "pause" keys 7 are incorporated into the top row of keys with no spacing between them.

Another embodiment of the invention is shown in Figure 3c, in which the "print screen", "scroll lock" and "pause" keys 7 are included in the 5 x 7 array 5 along the right hand side thereof. Also, this embodiment includes two blank keys 8 designated for user-defined functions.

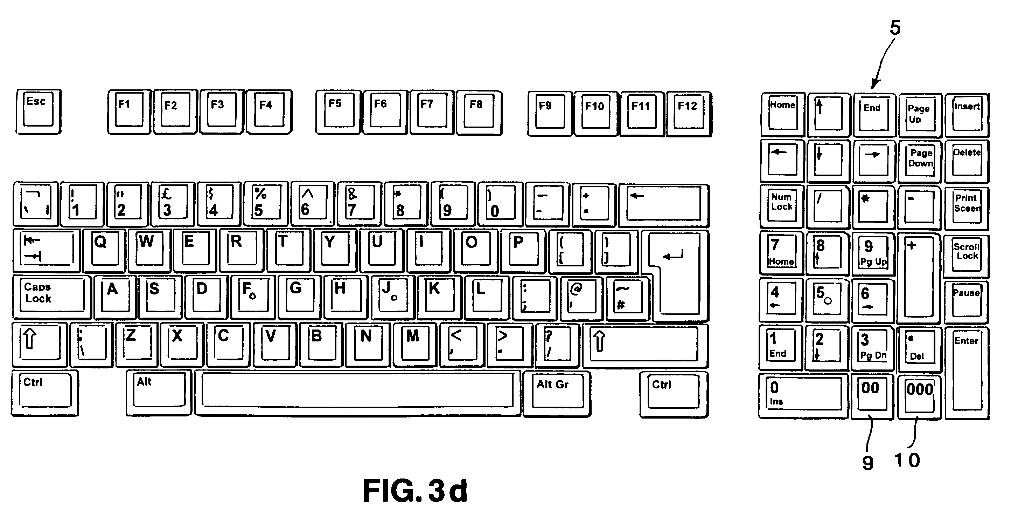

Another embodiment is shown in Figure 3d, which is similar to that of Figure 3c, except that keys 8 are omitted, but rearranged to provide special numeric keys 9 and 10 designated "00" and "000" for entry of a double zero or treble zero in one keystroke.

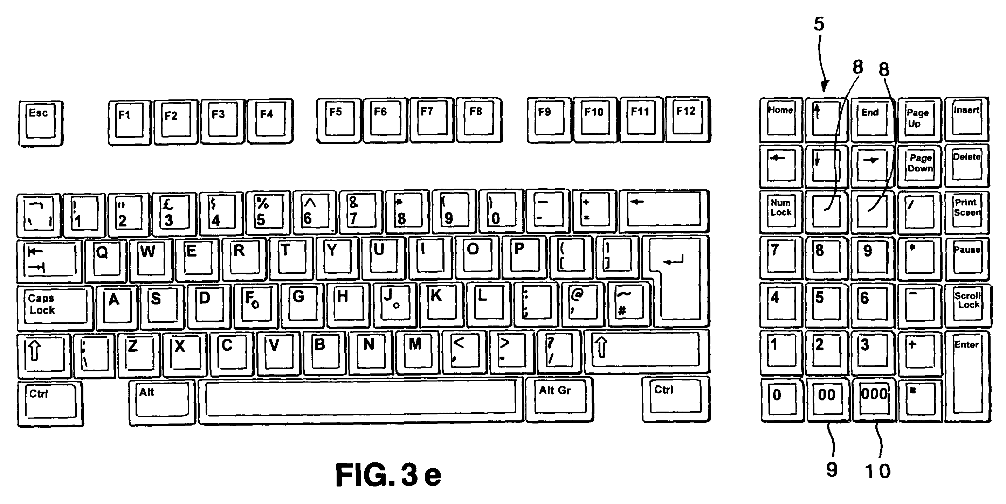

Another embodiment of the invention is shown in Figure 3e which combines the features of the embodiments shown in Figures 3c and 3d, i.e. there are two blank keys 8 for user-defined functions, and the two keys 9, 10 for double zero and treble zero entry.

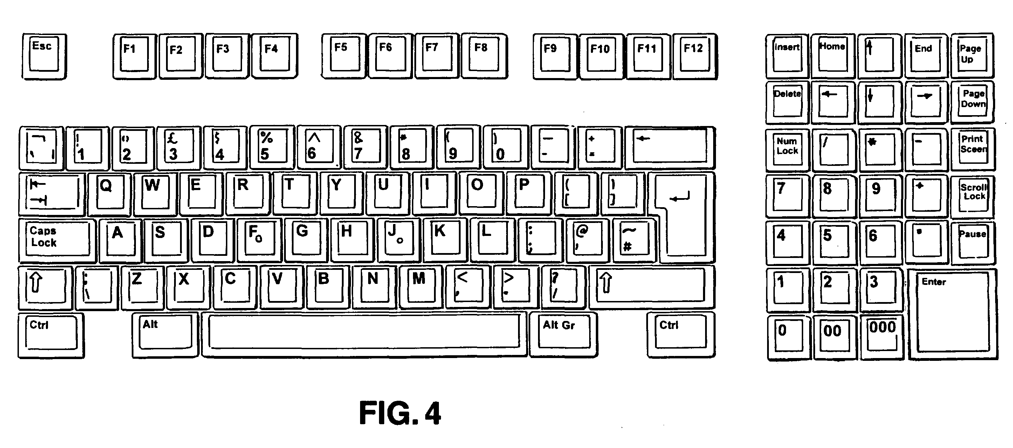

Another embodiment of the invention is shown in Figure 4, which is similar to that shown in 3e, except that the two blank function keys 8 are omitted, enabling the "enter" key to be enlarged to a quad size key, and placed at the bottom right hand corner, which is particularly advantageous for faster repetitive numeric data entry. The design constraints of the standard 4 X 5 array of numeric keys in an IBM - compatible keyboard would not allow the "enter" key to be any larger than a double - size key, as seen in Figure 1.

The embodiments shown in Figures 3e and 4 also illustrate another preferred feature of the invention, wherein the ten numeric keys and the keys for entry of double zero and treble zero, have only numeric indicia as the key legend, which is visually clearer and enables faster numeric data input. The numeric keys are not therefore assigned any dual or shift key function. That is not to say that the numeric keys illustrated in the other embodiments do have a dual functionality - they may if required - but only that the numeric key caps used in the manufacture of the keyboard may be standard IBM-compatible parts. For example, the illustrated key cap for entry of the numeral 7 in Figures 2 to 3e also includes the legend "home", but a separate key for the home function is provided within the 5 x 7 array, thus actually rendering redundant the dual or shift key functionality of that particular key.

The user-defined functions assigned to the blank keys 6,8 in the embodiments described above with reference to any of Figures 2, 3a, 3b, 3c and 3d, may be additional arithmetic functions, such as "per cent" (%) or may include a specific application function or "macro", such as for example "check account details" for a banking application.

In all of the embodiments of the invention described above, there is included a "num lock" key, but this could optionally be omitted and that key provided as an additional blank key for a user-defined function, since keyboard firmware for the 5 x 7 array may be adapted to control the number lock status of the numeric keys.

## Claims

1. A computer keyboard including a first group of keys adapted for alphanumeric data input, a second group of keys in an array located to the right or left side of the said first group, adapted for numeric data input comprising a second set of numeric keys for entry of the numerals 0-9, a decimal point key, a second set of mathematical function keys including plus, minus, multiply and divide, and a second "enter" key, **characterized by**
said second group of keys being a 5 x 7 array (5) of key caps, in which said array additionally includes at least fifteen designated function keys.

2. A computer keyboard according to claim 1, wherein said designated function keys are selected from the group comprising,
"insert", "delete";
five cursor keys, designated "arrow-up", "arrow-down", "arrow-left", "arrow-right" and "home";
"page up", "page down", "end";
"num lock;
"print screen", "scroll lock" and "pause" (7); and
a group of blank keys (6,8) available for user-defined functions.

3. A computer keyboard according to claim 2, wherein said group of blank keys (6,8) available for user-defined functions comprises five user-defined function keys.

4. A computer keyboard according to any of claims 1 to 3, comprising additional numeric keys (9,10) designated "00" and "000" for inputting double zero and treble zero respectively at one keystroke.

5. A computer keyboard according to any of the preceding claims, wherein the numeric key caps contain only numeric indicia as their legend, and are not designated with any dual or shift key functionality.

6. A computer keyboard according to claim 5, wherein all key caps in the said 5 x 7 array are not designated with any dual or shift key functionality.

7. A computer keyboard according to any of the preceding claims, wherein the "enter" key is a quadruple size key, defined by a 2 x 2 section of the array, preferably placed at the lower right hand corner of the array.

8. A computer keyboard according to claim 2, wherein extra funtion keys are made available for user-defined functions by not assigning one or more of the designated function keys selected from a group including those designated "num lock", "print screen", "scroll lock" and "pause".

9. A computer keyboard according to any of the preceding claims, being an IBM-compatible keyboard.
